# EUROPEAN PATENT APPLICATION

(11) **EP 4 707 155 A1**
(43) Date of publication of application: **11.03.2026**
(21) Application number: 25198128.8
(22) Date of filing: 26.08.2025
(51) Int. Cl.: B63H 5/125, B63H 20/12, B63H 20/16, B63H 20/20, B63H 20/28, B63H 20/32, B63H 21/17, B63H 25/24, B63H 20/02, B63H 20/14, H02K 7/00

(54) **MARINE PROPULSION DEVICE**

(30) Priority: 26.08.2024 JP 2024144585
(71) Applicant: Suzuki Motor Corporation, Shizuoka 432-8611 (JP)
(72) Inventor: MIYASHITA, Yasushi, Shizuoka, 432-8611 (JP)
(74) Representative: Haseltine Lake Kempner LLP

(57) **Abstract**

A marine propulsion device includes a motor including an output shaft, a drive shaft extending in a vertical direction of the marine propulsion device, and a cooling device. The motor is disposed so that an extension direction of the output shaft is a direction perpendicular to the vertical direction. The cooling device includes an intake port taking water outside the marine propulsion device into the marine propulsion device, a motor water jacket provided in the motor and cooling the motor, a water pump disposed below the motor and sending water taken into the marine propulsion device from the intake port to the motor water jacket as cooling water, and a first cooling water passage connecting a discharge port of the water pump to an inlet port of the motor water jacket.

## Description

### TECHNICAL FIELD

The present invention relates to a marine propulsion device including a motor as a power source for rotating a propeller.

### BACKGROUND ART

JP2005-162055A describes an outboard motor including a motor (electric motor) as a power source for rotating a propeller. In such outboard motor, the motor is disposed in an upper part of the outboard motor. When the outboard motor is mounted on a boat, the motor is positioned above the water surface. The motor is disposed vertically so that an output shaft thereof extends in a vertical direction. Meanwhile, the propeller is disposed in a lower part of the outboard motor. When the outboard motor is mounted on a boat, the propeller is positioned below the water surface. The propeller is provided at a rear part of a propeller shaft that extends in a front-rear direction in the lower part of the outboard motor. A drive shaft that transmits power of the motor to the propeller is provided between the motor and the propeller shaft. The drive shaft extends in the vertical direction, and an upper end of the drive shaft is connected to a lower end of the output shaft of the motor via a drive gear and a driven gear. A lower end of the drive shaft is connected to the propeller shaft via a bevel gear.

The outboard motor described in JP2005-162055A includes a water-cooling cooling device that cools the motor. The cooling device includes a water jacket provided in the motor, an intake port that takes water from outside the outboard motor into the outboard motor, and a pump that sends the water taken in from the intake port to the water jacket. In the outboard motor, water is taken in from the intake port by driving the pump, and is sent to the water jacket of the motor as cooling water. The cooling water flows in the water jacket, thereby cooling the motor.

In the outboard motor, the pump is provided on an upper surface of a lower case on which the propeller shaft is supported to be rotatable. Meanwhile, the motor is disposed at a position far above the upper surface of the lower case. Therefore, the motor is positioned above the pump. A passage that carries the cooling water discharged from the pump to the water jacket provided on the motor (specifically, a cooling water pipe and a communication passage) is provided between the pump and the motor. The pump is driven upon receiving rotation of the drive shaft.

Generally, a water jacket of a motor is configured of a flow path provided in or around the motor, and the motor is cooled by cooling water flowing in the flow path. Generally, the flow path configuring the water jacket is formed over a wide area of the motor. Specifically, the flow path configuring the water jacket is formed around an entire circumference of the motor and is formed from one axial end to the other axial end of the motor. By forming the flow path configuring the water jacket over a wide area of the motor as such, the number of positions through which cooling water flows in or around the motor can be increased, thereby improving cooling capacity for the motor by the water jacket.

### SUMMARY OF INVENTION

According to one advantageous aspect of the present invention, there is provided a marine propulsion device including:
a motor including an output shaft;
a drive shaft extending in a vertical direction of the marine propulsion device;
a first transmission mechanism configured to transmit a rotation of the output shaft of the motor to the drive shaft,
a propeller shaft;
a second transmission mechanism configured to transmit a rotation of the drive shaft to the propeller shaft;
a propeller; and
a cooling device, in which
the motor is disposed so that an extension direction of the output shaft is a direction perpendicular to the vertical direction,
the first transmission mechanism is disposed in front of the motor,
the second transmission mechanism is disposed below the first transmission mechanism,
the drive shaft extends between the first transmission mechanism and the second transmission mechanism,
the propeller shaft extends rearward from the second transmission mechanism,
the propeller is provided in a rear part of the propeller shaft, and
the cooling device includes
   an intake port configured to take water outside the marine propulsion device into the marine propulsion device,
   a motor water jacket provided in the motor and configured to cool the motor,
   a water pump disposed below the motor and configured to send water taken into the marine propulsion device from the intake port to the motor water jacket as cooling water, and
   a first cooling water passage connecting a discharge port of the water pump to an inlet port of the motor water jacket.

### BRIEF DESCRIPTION OF DRAWINGS

Fig. 1 is an overall view illustrating a marine propulsion device according to an example of the present invention as viewed from the left.
Fig. 2 is an explanatory diagram illustrating an upper part of the marine propulsion device according to the example of the present invention as viewed from behind.
Fig. 3 is a cross-sectional view illustrating the marine propulsion device cut along a line A-A in Fig. 2 as viewed from the left.
Fig. 4 is a perspective view illustrating the upper part of the marine propulsion device according to the example of the present invention as viewed from the upper front left.
Fig. 5 is an explanatory diagram illustrating a motor, a speed reducer housing, a drive shaft housing, a mount housing, a lower case, and an inverter separated from each other in the marine propulsion device according to the example of the present invention.
Fig. 6 is a block diagram illustrating a configuration of a cooling device in the marine propulsion device according to the example of the present invention.
Fig. 7 is an enlarged cross-sectional view of a portion of the marine propulsion device in Fig. 3 including a water pump, a supply passage, a branch passage, and a speed reducer cooling chamber.
Fig. 8A is an enlarged cross-sectional view of the motor in the marine propulsion device in Fig. 3, and Fig. 8B is an enlarged perspective view of a portion of the marine propulsion device in Fig. 4 including an outlet port of a motor water jacket, a connecting passage, and an inlet port of an inverter water jacket.
Fig. 9A is a cross-sectional view illustrating the inverter, the inverter water jacket, and the connecting passage cut along a line B-B in Fig. 2 as viewed from the left, and Fig. 9B is a cross-sectional view illustrating the inverter, the inverter water jacket, and a portion of a discharge passage cut along a line C-C in Fig. 2 as viewed from the right.
Fig. 10 is a perspective view illustrating the upper part of the marine propulsion device according to the example of the present invention as viewed from the rear right.

### DESCRIPTION OF EMBODIMENTS

To fully exhibit the cooling capacity for the motor by the water jacket, it is necessary to use a pump that sends the cooling water taken in from the intake port throughout every area of the flow path configuring the water jacket. Therefore, when determining a required head of a pump to be used in a cooling device of a marine propulsion device, it is necessary to consider a difference in height between a position of a discharge port of the pump and a position of an uppermost end of a flow path configuring a water jacket provided in a motor, so that the cooling water discharged from the pump can flow to the uppermost end of the flow path configuring the water jacket. Specifically, the greater the difference in height between the position of the discharge port of the water pump and the position of the uppermost end of the flow path configuring the water jacket provided in the motor, the higher the required head of the pump is estimated.

Generally, in many motors, a dimension in an axial direction of the motor (a direction in which an output shaft extends) is greater than a dimension in a radial direction of the motor. Therefore, when the motor is disposed vertically so that the output shaft of the motor extends in a vertical direction of the outboard motor, as in the outboard motor described in JP2005-162055A, the position of the uppermost end of the flow path configuring the water jacket provided on the motor is higher than when the motor is disposed horizontally so that the output shaft of the motor extends in a horizontal direction of the outboard motor. As a result, the difference in height between the position of the discharge port of the water pump and the position of the uppermost end of the flow path configuring the water jacket provided on the motor becomes large. Therefore, the required head of the pump becomes high, and a large pump that satisfies such required head is required for use in a cooling device of a marine propulsion device. An increase in size of the pump leads to an increase in size of the marine propulsion device that is undesirable because it also leads to an increase in manufacturing costs of the marine propulsion device.

The present invention is made considering, for example, the problem described above, and an object of the present invention is to provide a marine propulsion device that enables reduction in size of a pump in a cooling device.

A marine propulsion device according to an embodiment of the present invention includes a motor, a drive shaft, a first transmission mechanism that transmits rotation of an output shaft of the motor to the drive shaft, a propeller shaft, a second transmission mechanism that transmits rotation of the drive shaft to the propeller shaft, a propeller, and a cooling device.

In the marine propulsion device of the embodiment, the motor is disposed so that an extension direction of the output shaft is a front-rear direction. The first transmission mechanism is disposed in front of the motor. The second transmission mechanism is disposed below the first transmission mechanism. The drive shaft extends in a vertical direction between the first transmission mechanism and the second transmission mechanism. The propeller shaft extends rearward from the second transmission mechanism. The propeller is provided in a rear part of the propeller shaft.

In the marine propulsion device of the embodiment, when the motor is driven, the rotation of the output shaft is transmitted to the drive shaft by the first transmission mechanism, thereby rotating the drive shaft. The rotation of the drive shaft is transmitted to the propeller shaft by the second transmission mechanism to rotate the propeller shaft, thereby rotating the propeller.

The cooling device for the marine propulsion device of the embodiment includes an intake port that takes water outside the marine propulsion device into the marine propulsion device, a motor water jacket provided in the motor, a water pump that sends the water taken into the marine propulsion device from the intake port to the motor water jacket as cooling water, and a first cooling water passage that connects a discharge port of the water pump to an inlet port of the motor water jacket. The motor water jacket is configured of a flow path provided in or around the motor. The flow path configuring the motor water jacket is formed around an entire circumference of the motor and is formed from one axial end to the other axial end of the motor. The water pump is disposed below the motor. That is, the motor is positioned higher than the water pump. The motor water jacket provided in the motor is also positioned higher than the water pump.

In the marine propulsion device of the embodiment, when the water pump is driven, water taken in from the water intake port flows in the first cooling water passage as cooling water and is sent to the motor water jacket. The cooling water sent to the motor water jacket flows in the flow path of the motor water jacket, thereby cooling the motor.

To fully exhibit cooling capacity for the motor by the motor water jacket, it is necessary to use a water pump that sends the cooling water taken in from the intake port throughout every area of the flow path configuring the motor water jacket. Therefore, when determining a required head of a water pump to be used in a cooling device of a marine propulsion device, it is necessary to consider a difference in height between a position of a discharge port of the water pump and a position of an uppermost end of a flow path configuring the motor water jacket, so that the cooling water discharged from the water pump can flow to the uppermost end of the flow path configuring the motor water jacket.

Generally, in many motors, a motor has a cylindrical outer shape, and a radial dimension of the motor is smaller than an axial dimension of the motor. Therefore, when comparing a case of disposing a motor so that an extension direction of an output shaft thereof is a front-rear direction to a case of disposing a motor so that an extension direction of an output shaft thereof is a vertical direction, the motors being on the same horizontal plane, a position of an uppermost end of the motor will be lower when the motor is disposed so that the extension direction of the output shaft thereof is the front-rear direction. Since the flow path configuring the motor water jacket is formed around the entire circumference of the motor and is formed from one axial end of the motor to the other axial end, when comparing a case of disposing a motor provided with a motor water jacket so that an extension direction of an output shaft thereof is the front-rear direction to a case of disposing a motor provided with a motor water jacket so that an extension direction of an output shaft thereof is the vertical direction, the motors being on the same horizontal plane, a position of an uppermost end of the flow path configuring the motor water jacket is lower when the motor provided with the motor water jacket is disposed so that the extension direction of the output shaft thereof is the front-rear direction.

In the marine propulsion device of the embodiment, the motor is disposed horizontally so that the extension direction of the output shaft thereof is the front-rear direction. Therefore, the position of the uppermost end of the flow path configuring the motor water jacket can be lowered in the marine propulsion device of the embodiment compared to a marine propulsion device in which a motor is disposed vertically so that an extension direction of an output shaft thereof is the vertical direction. Therefore, a difference in height between a position of a discharge port of the water pump and the position of the uppermost end of the flow path configuring the motor water jacket can be reduced, thereby lowering the required head of the water pump to be used in the marine propulsion device. Since it is easier to miniaturize a water pump having a low head compared to miniaturizing a water pump having a high head, by lowering the required head of the water pump to be used in the marine propulsion device, the water pump to be used in the marine propulsion device can be miniaturized.

### Example

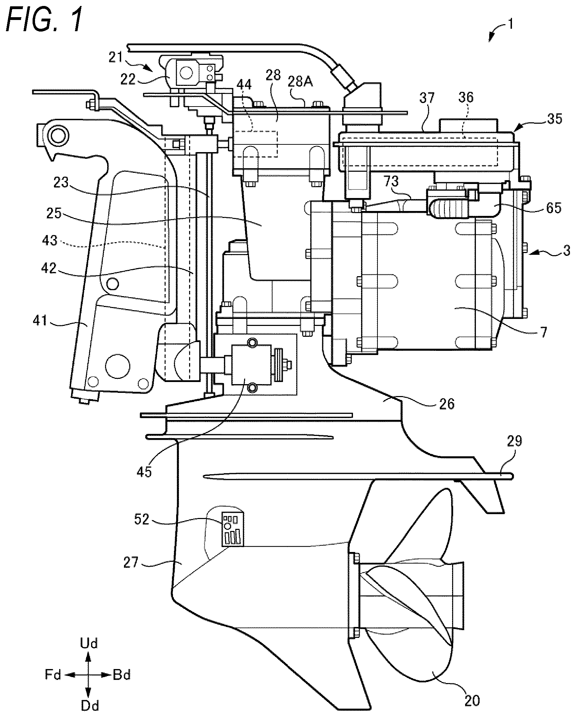

A marine propulsion device according to an example of the present invention will be described with reference to the drawings. In the description of the example, directions of up (Ud), down (Dd), front (Fd), back (Bd), left (Ld), and right (Rd) follow arrows drawn at the bottom left in Figs. 1 to 4 and 7 to 10. The directions refer to directions in the marine propulsion device.

### Marine Propulsion Device

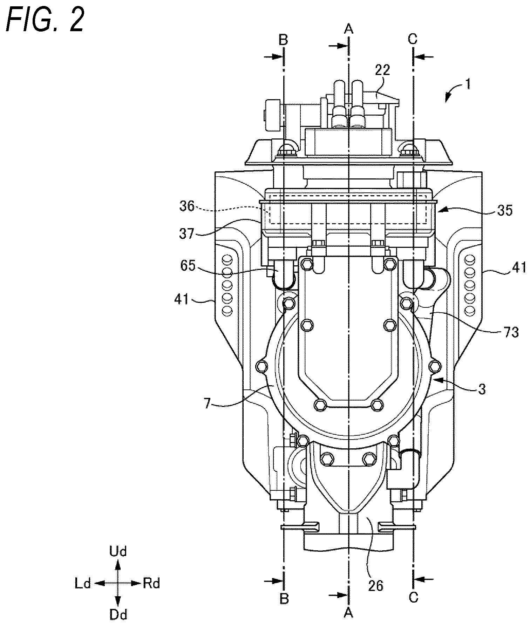

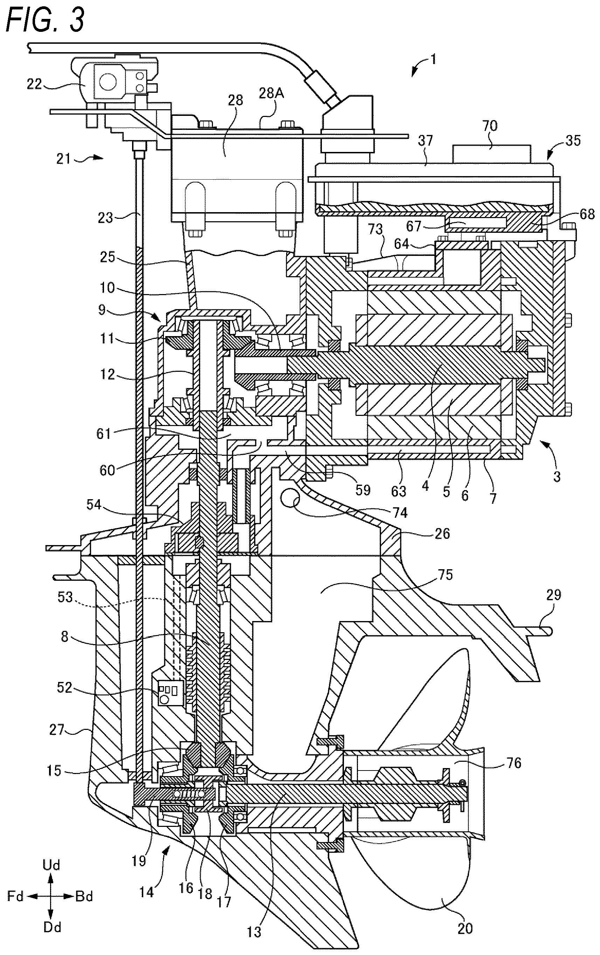

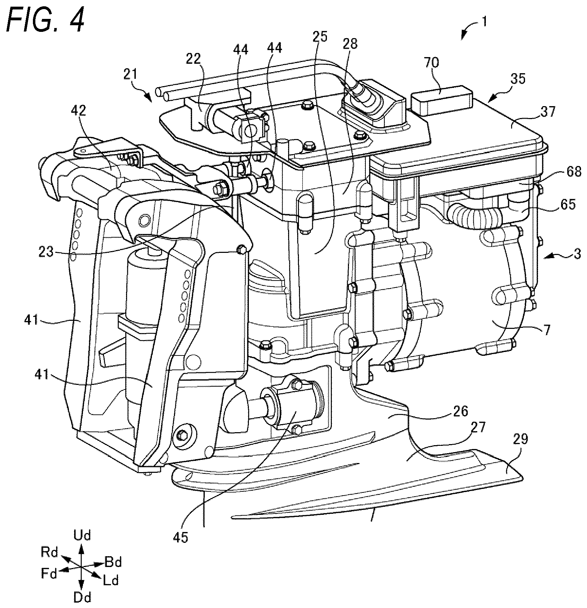

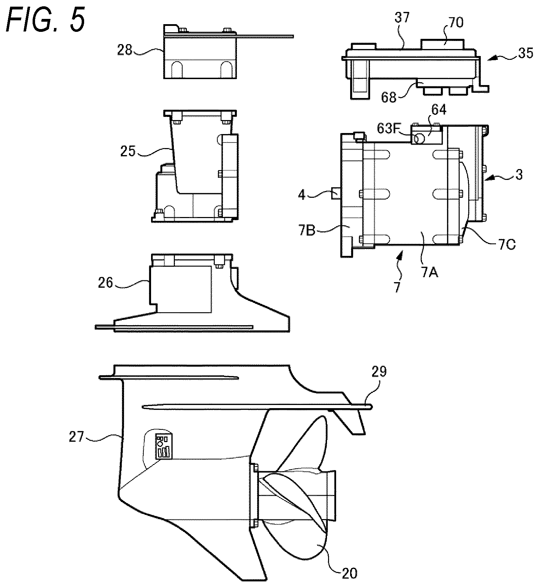

Fig. 1 illustrates a marine propulsion device 1 according to an example of the present invention as viewed from the left. Fig. 2 illustrates an upper part of the marine propulsion device 1 as viewed from behind. Fig. 3 illustrates a cross section of the marine propulsion device 1 cut along a line A-A in Fig. 2 as viewed from the left. Fig. 4 illustrates the upper part of the marine propulsion device 1 as viewed from the upper front left. Fig. 5 illustrates a motor 3, a speed reducer housing 25, a drive shaft housing 26, a mount housing 28, a lower case 27, and an inverter 35 separated from each other.

The marine propulsion device 1 is a device for propelling a boat. As illustrated in Fig. 1, the marine propulsion device 1 of the example is an outboard motor, and is mounted on a boat. As illustrated in Fig. 3, the marine propulsion device 1 includes the motor 3 as a power source for rotating a propeller 20, a drive shaft 8 that transmits power of the motor 3 to the propeller 20, a speed reducer 9 that reduces rotation of an output shaft 4 of the motor 3 and transmits the rotation to the drive shaft 8, a propeller shaft 13, a rotation transmission mechanism 14 that transmits rotation of the drive shaft 8 to the propeller shaft 13, and the propeller 20 that converts the power of the motor 3 into thrust for the boat. The speed reducer 9 is a specific example of a "first transmission mechanism", and the rotation transmission mechanism 14 is a specific example of a "second transmission mechanism".

The motor 3 and the speed reducer 9 are disposed in the upper part of the marine propulsion device 1. When the marine propulsion device 1 is mounted on the boat, the motor 3 and the speed reducer 9 are positioned above the water surface. Meanwhile, the rotation transmission mechanism 14, the propeller shaft 13, and the propeller 20 are disposed in a lower part of the marine propulsion device 1. When the marine propulsion device 1 is mounted on the boat, the rotation transmission mechanism 14, the propeller shaft 13, and the propeller 20 are positioned below the water surface.

As illustrated in Fig. 3, the motor 3 includes the output shaft 4 as an output shaft for power, a rotor 5 provided in an outer periphery of the output shaft 4, a stator 6 provided in an outer periphery of the rotor 5, and a motor case 7 having a substantially cylindrical shape. The motor case 7 accommodates the output shaft 4 excluding a tip portion, the rotor 5, and the stator 6. As illustrated in Fig. 3, the motor 3 is disposed so that an extension direction of the output shaft 4 is a front-rear direction of the marine propulsion device. In addition, although the extension direction of the output shaft 4 is the front-rear direction in the present embodiment, the extension direction may be other directions perpendicular to the vertical direction.

As illustrated in Fig. 3, the speed reducer 9 is disposed in front of the motor 3. The speed reducer 9 includes a motor drive gear 10, a reduction gear 11, and a connecting shaft 12. Both the motor drive gear 10 and the reduction gear 11 are bevel gears. A rotation axis of the motor drive gear 10 extends in the front-rear direction. A rear part of the motor drive gear 10 is coupled to a front part of the output shaft 4 of the motor 3, and the motor drive gear 10 rotates integrally with the output shaft 4. A rotation axis of the reduction gear 11 extends in a vertical direction. The reduction gear 11 is disposed in front of the motor drive gear 10 and meshes with the motor drive gear 10. A gear ratio between the motor drive gear 10 and the reduction gear 11 (number of teeth of the reduction gear 11 / number of teeth of the motor drive gear 10) is greater than 1. The connecting shaft 12 extends in the vertical direction. The reduction gear 11 is coupled to an upper end of the connecting shaft 12, and the connecting shaft 12 rotates integrally with the reduction gear 11.

The drive shaft 8 extends in the vertical direction. The drive shaft 8 is disposed between the speed reducer 9 and the rotation transmission mechanism 14. An upper end of the drive shaft 8 is connected to a lower end of the connecting shaft 12 of the speed reducer 9, and the drive shaft 8 rotates integrally with the connecting shaft 12.

The rotation transmission mechanism 14 is disposed below the speed reducer 9. The rotation transmission mechanism 14 includes a transmission gear 15, a forward gear 16, a reverse gear 17, a dog clutch 18, and a shift plunger 19. The transmission gear 15, the forward gear 16, and the reverse gear 17 are all bevel gears. A rotation axis of the transmission gear 15 extends in the vertical direction. The transmission gear 15 is coupled to a lower end of the drive shaft 8 and rotates integrally with the drive shaft 8. Rotation axes of the forward gear 16 and the reverse gear 17 extend in the front-rear direction. The forward gear 16 is disposed in front of the transmission gear 15, and the reverse gear 17 is disposed behind the transmission gear 15. The forward gear 16 and the reverse gear 17 each mesh with the transmission gear 15, and upon receiving rotation of the transmission gear 15, the forward gear 16 and the reverse gear 17 rotate in opposite directions to each other. A through hole is formed in each of a center of the forward gear 16 and a center of the reverse gear 17, and a front part of the propeller shaft 13 is inserted into the through holes. The forward gear 16 and the reverse gear 17 are not fixed to the propeller shaft 13 and are rotatable relative to the propeller shaft 13. The dog clutch 18 is disposed between the forward gear 16 and the reverse gear 17. The dog clutch 18 is attached to the front part of the propeller shaft 13 to not be rotatable relative to the propeller shaft 13 and to be movable in the front-rear direction relative to the propeller shaft 13. The shift plunger 19 is attached in a front end of the propeller shaft 13 to be movable in the front-rear direction relative to the propeller shaft 13. A rear end of the shift plunger 19 is connected to the dog clutch 18. A front end of the shift plunger 19 is positioned near a lower end of a shift rod 23 (described below), and rotation of the shift rod 23 is transmitted to the shift plunger 19 via a cam mechanism. When the shift rod 23 pivots by driving a shift actuator 22 described below, pivoting of the shift rod 23 is transmitted to the shift plunger 19 via the above-described cam mechanism so that the shift plunger 19 moves forward or rearward, and in response, the dog clutch 18 moves forward or rearward. When the dog clutch 18 moves forward, the dog clutch 18 and the forward gear 16 engage with each other, thereby transmitting rotation of the forward gear 16 to the propeller shaft 13. Meanwhile, when the dog clutch 18 moves rearward, the dog clutch 18 and the reverse gear 17 engage with each other, thereby transmitting rotation of the reverse gear 17 to the propeller shaft 13.

The propeller shaft 13 extends in the front-rear direction. The front part of the propeller shaft 13 extends into the rotation transmission mechanism 14, and a rear part of the propeller shaft 13 extends rearward from the rotation transmission mechanism 14. The propeller 20 is fixed to the rear part of the propeller shaft 13 and rotates integrally with the propeller shaft 13.

By controlling the inverter 35 (described below), the motor 3 is driven so that a rotation direction of the output shaft 4 is always a certain direction. When the motor 3 is driven, rotation of the output shaft 4 of the motor 3 is transmitted to the forward gear 16 and the reverse gear 17 via the motor drive gear 10, the reduction gear 11, the connecting shaft 12, the drive shaft 8, and the transmission gear 15 in this order. When the dog clutch 18 is moved forward, rotation of the forward gear 16 is transmitted to the propeller shaft 13, causing the propeller shaft 13 and the propeller 20 to rotate forward. Forward rotation of the propeller 20 generates thrust to move the boat forward. Meanwhile, when the dog clutch 18 is moved rearward, rotation of the reverse gear 17 is transmitted to the propeller shaft 13, causing the propeller shaft 13 and the propeller 20 to rotate reversely. Reverse rotation of the propeller 20 generates thrust to move the boat rearward.

The marine propulsion device 1 also includes a shift device 21 that controls switching of a rotation direction of the propeller 20. The shift device 21 includes the shift actuator 22 and the shift rod 23. The shift actuator 22 is an actuator that controls movement of the dog clutch 18, and is provided in a front side portion of the upper part of the marine propulsion device 1. The shift actuator 22 is, for example, a small motor. The shift rod 23 is a rod that transmits power of the shift actuator 22 to the shift plunger 19. The shift rod 23 extends in the vertical direction from the shift actuator 22 toward the front end of the shift plunger 19. An upper end of the shift rod 23 is connected to the shift actuator 22. A lower end of the shift rod 23 is positioned near the front end of the shift plunger 19. By driving the shift actuator 22, the shift rod 23 is pivoted. Rotational motion of the shift rod 23 is converted into linear motion in the front-rear direction of the shift plunger 19 by a cam mechanism provided between the lower end of the shift rod 23 and the front end of the shift plunger 19. As described above, movement of the shift plunger 19 causes the dog clutch 18 to move.

The marine propulsion device 1 includes a speed reducer housing 25 that covers the speed reducer 9, the drive shaft housing 26 that covers an upper part of the drive shaft 8, the lower case 27 that covers a lower part of the drive shaft 8, the rotation transmission mechanism 14, and the front part of the propeller shaft 13, and the mount housing 28 that covers an upper mount 44. The speed reducer housing 25 is a specific example of a "transmission mechanism housing".

As can be seen from Figs. 1, 3, and 5, the drive shaft housing 26 is disposed below the speed reducer housing 25 and is attached to the speed reducer housing 25 using a fastening member such as a bolt. The lower case 27 is disposed below the drive shaft housing 26 and is attached to the drive shaft housing 26 using a fastening member such as a bolt. The mount housing 28 is disposed above the speed reducer housing 25 and is attached to the speed reducer housing 25 using a fastening member such as a bolt.

The motor 3 is positioned behind the speed reducer housing 25 and the drive shaft housing 26. Specifically, an upper part of the motor 3 is positioned behind the speed reducer housing 25, and a lower part of the motor 3 is positioned behind the drive shaft housing 26. The motor 3 is mounted on the speed reducer housing 25 and the drive shaft housing 26 using a fastening member such as a bolt.

The marine propulsion device 1 includes the inverter 35 that controls driving of the motor 3. As illustrated in Fig. 1, the inverter 35 includes an inverter body 36 including electric and electronic circuits that control driving of the motor 3, and an inverter case 37 that accommodates the inverter body 36. The inverter 35 has a substantially rectangular parallelepiped outer shape. The inverter 35 is disposed above the motor 3 and is mounted on the motor 3 using a fastening member such as a bolt. The inverter 35 is positioned below an upper surface 28A of the mount housing 28.

As illustrated in Figs. 1 and 4, the marine propulsion device 1 is provided with a pair of left and right clamp brackets 41 that mount the marine propulsion device 1 to the boat. A swivel bracket 42 is provided between the pair of clamp brackets 41. A pilot shaft 43 is supported to be pivotable by the swivel bracket 42. The pilot shaft 43 is connected to the marine propulsion device 1 by mounts 44 and 45. A front part of the upper mount 44 is coupled to an upper end of the pilot shaft 43, and a rear part of the mount 44 is inserted into the mount housing 28 and attached to the mount housing 28. A front part of the lower mount 45 is coupled to a lower end of the pilot shaft 43, and a rear part of the mount 45 is attached to the drive shaft housing 26. The marine propulsion device 1 can horizontally pivot relative to the boat with the pilot shaft 43 as a pivot axis, thereby changing an orientation of the propeller 20 in the left-right direction.

### Cooling Device

The marine propulsion device 1 includes a cooling device 51 that cools the motor 3, the speed reducer 9, and the inverter 35. The cooling device 51 is a water-cooling cooling device that uses water (for example, seawater) outside the marine propulsion device 1 to cool the motor 3, the speed reducer 9, and the inverter 35.

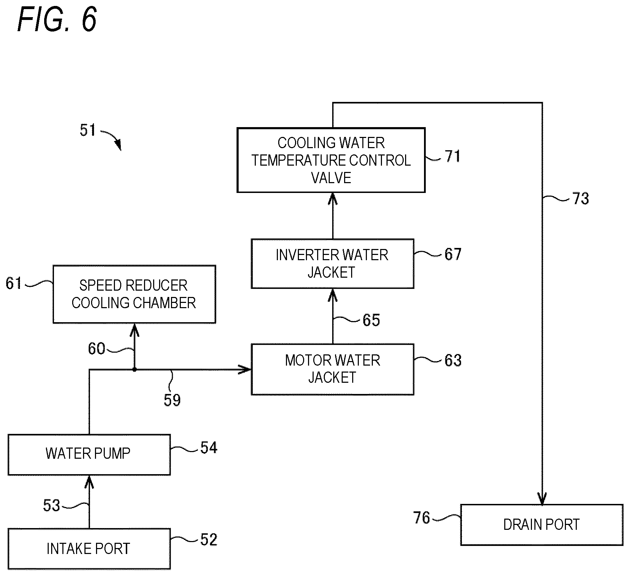

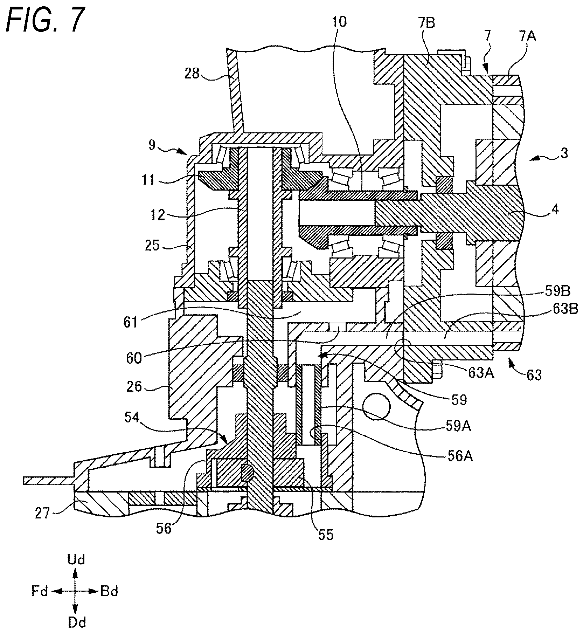

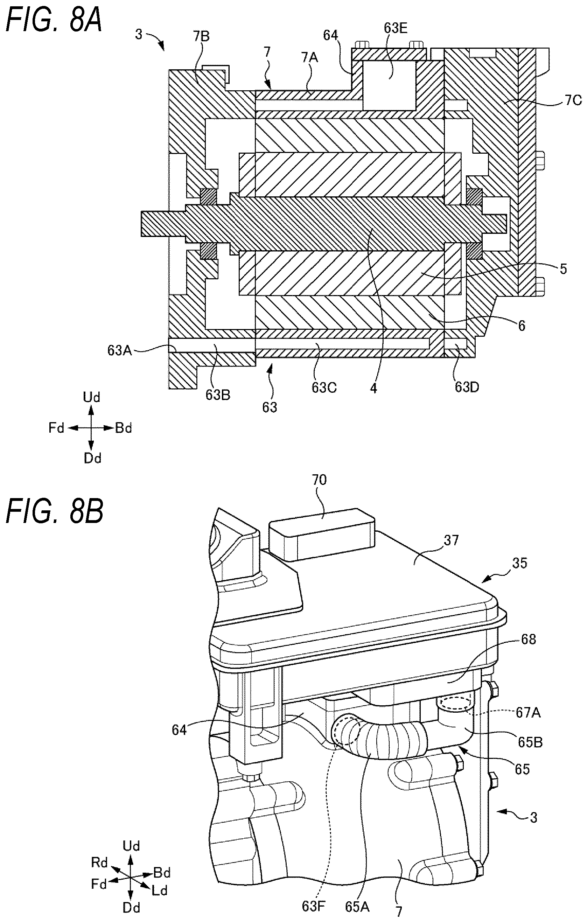

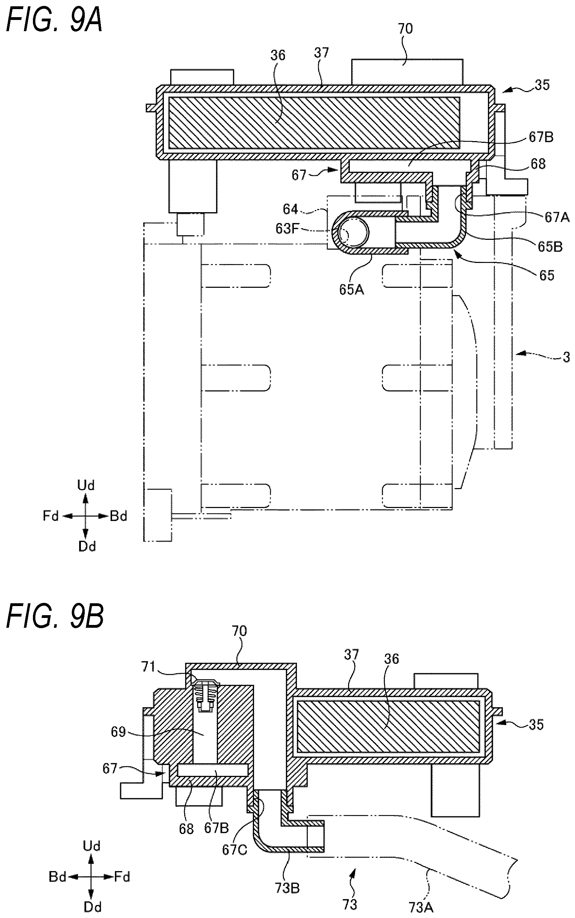

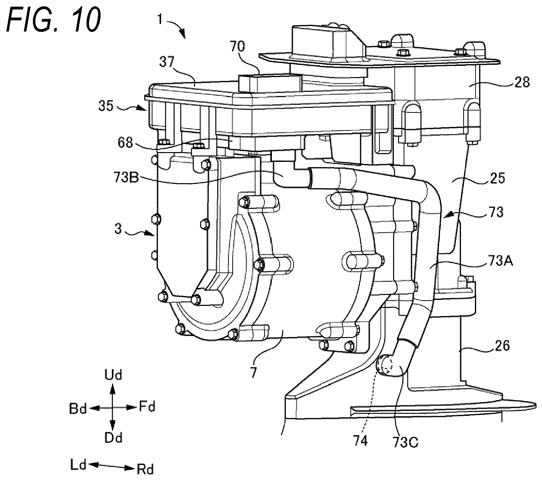

Fig. 6 illustrates a configuration of the cooling device 51. Fig. 7 illustrates an enlarged view of a portion of the marine propulsion device 1 in Fig. 3 including a water pump 54, a supply passage 59, a branch passage 60, and a speed reducer cooling chamber 61. Fig. 8A illustrates an enlarged view of the motor 3 in the marine propulsion device 1 in Fig. 3. Fig. 8B illustrates an enlarged view of a portion of the marine propulsion device 1 in Fig. 4 including an outlet port 63F of a motor water jacket 63, a connecting passage 65, and an inlet port 67A of an inverter water jacket 67. Fig. 9A illustrates a cross section of the inverter 35, the inverter water jacket 67, and the connecting passage 65 cut along a line B-B in Fig. 2 as viewed from the left. Fig. 9B illustrates a cross section of the inverter 35, the inverter water jacket 67, and a portion of a discharge passage 73 cut along a line C-C in Fig. 2 as viewed from the right. Fig. 10 illustrates the upper part of the marine propulsion device 1 as viewed from the rear right.

As illustrated in Fig. 6, the cooling device 51 includes an intake port 52, an intake passage 53, the water pump 54, the supply passage 59, the branch passage 60, the speed reducer cooling chamber 61, the motor water jacket 63, the connecting passage 65, the inverter water jacket 67, a cooling water temperature control valve 71, the discharge passage 73, and a drain port 76. The supply passage 59 is a specific example of a "first cooling water passage". The branch passage 60 is a specific example of a "second cooling water passage". The speed reducer cooling chamber 61 is a specific example of a "transmission mechanism cooling portion". The connecting passage 65 is a specific example of a "third cooling water passage". The cooling water temperature control valve 71 is a specific example of a "valve". The discharge passage 73 is a specific example of a "fourth cooling water passage".

The intake port 52 is a port that takes water outside the marine propulsion device 1 into the marine propulsion device 1 as cooling water. The intake port 52 is provided in the lower part of the marine propulsion device 1 submerged in water. Specifically, as illustrated in Fig. 1, the intake port 52 is provided in a front part of the lower case 27 below an anti-cavitation plate 29.

As illustrated in Fig. 3, the intake passage 53 is a passage that connects the intake port 52 to a suction port of the water pump 54. The intake passage 53 is configured of, for example, a hole formed in the lower case 27. The cooling water taken in from the water intake port 52 flows in the water intake passage 53 toward the suction port of the water pump 54.

The water pump 54 is a pump that sends cooling water taken into the marine propulsion device 1 from outside the marine propulsion device 1 via the intake port 52 to the motor water jacket 63 and the like. The water pump 54 is, for example, a rotary variable displacement water pump. As illustrated in Fig. 7, the water pump 54 is disposed below the speed reducer 9. The water pump 54 is disposed below the motor 3. The water pump 54 is disposed at a lower part in the drive shaft housing 26. An impeller 55 of the water pump 54 is attached to the drive shaft 8 and rotates integrally with the drive shaft 8. A pump case 56 of the water pump 54 is attached to an upper surface of the lower case 27.

The supply passage 59 is a passage that connects a discharge port 56A of the water pump 54 to an inlet port 63A of the motor water jacket 63. The supply passage 59 is provided in the drive shaft housing 26. The supply passage 59 is configured of, for example, a tube 59A formed of a pipe or a hose, and a hole 59B formed in the drive shaft housing 26. The cooling water discharged from the discharge port 56A of the water pump 54 flows in the supply passage 59 toward the inlet port 63A of the motor water jacket 63.

The branch passage 60 is a passage that branches from midway of the supply passage 59 and connects the supply passage 59 to the speed reducer cooling chamber 61. The branch passage 60 is provided in the drive shaft housing 26. The branch passage 60 is configured of, for example, a hole formed in the drive shaft housing 26.

The speed reducer cooling chamber 61 is a chamber that cools oil in the speed reducer housing 25 by cooling water. By cooling the oil in the speed reducer housing 25, the motor drive gear 10 and the reduction gear 11 of the speed reducer 9 are cooled. The speed reducer cooling chamber 61 is provided in an upper part in the drive shaft housing 26. The speed reducer cooling chamber 61 is disposed below the speed reducer 9 and close to the speed reducer 9. The cooling water flows from inside of the supply passage 59 to inside of the speed reducer cooling chamber 61 or from inside of the speed reducer cooling chamber 61 to inside of the supply passage 59 via the branch passage 60. For example, when a flow rate of cooling water in the supply passage 59 increases while the speed reducer cooling chamber 61 is not filled with cooling water, the cooling water flows from inside of the supply passage 59 to inside of the speed reducer cooling chamber 61 via the branch passage 60. Meanwhile, when the flow rate of the cooling water in the supply passage 59 decreases, the cooling water flows out from inside of the speed reducer cooling chamber 61 to inside of the supply passage 59 via the branch passage 60.

The motor water jacket 63 is provided on the motor 3 as illustrated in Fig. 8A. The motor water jacket 63 is configured of a flow path provided around the motor 3. The flow path configuring the motor water jacket 63 is formed around an entire circumference of the motor 3 and is formed from one axial end to the other axial end of the motor 3. Specifically, the motor case 7 includes a case body 7A having a cylindrical shape surrounding an entire outer periphery of the stator 6, a cover 7B that covers and closes one axial side of the case body 7A and has a hole in a center through which the output shaft 4 passes, and a cover 7C that covers and closes the other axial side of the case body 7A. The motor water jacket 63 includes, for example, a flow path 63B formed in the cover 7B, a flow path 63C formed around an entire circumference in a peripheral wall of the case body 7A, a flow path 63D formed in the cover 7C, and an outlet chamber 63E formed in an upper part of the case body 7A. The flow paths 63B, 63C, and 63D are holes through which cooling water can flow. The flow paths 63B and 63C communicate with each other, and the flow paths 63C and 63D communicate with each other. The motor 3 is cooled by the cooling water flowing in the motor water jacket 63, that is, in the flow paths 63B, 63C, and 63D.

The inlet port 63A of the motor water jacket 63 is provided at a lower part of a front part of the motor 3. The inlet port 63A is formed in a front end of a lower part of the cover 7B. The inlet port 63A opens forward. The inlet port 63A is connected to the supply passage 59 and communicates with the flow path 63B. The cooling water flows from inside of the supply passage 59, passes the inlet port 63A, and flows into the flow path 63B.

An outlet portion 64 is provided in the upper part of the motor 3 disposed horizontally. The outlet portion 64 is formed in the upper part of the case body 7A. The outlet chamber 63E is formed in the outlet portion 64. The outlet chamber 63E corresponds to a terminal end of the flow path configuring the motor water jacket 63. The outlet chamber 63E is an uppermost end of the flow path configuring the motor water jacket 63 provided in the motor 3 disposed horizontally. The flow path 63C communicates with inside of the outlet chamber 63E. As illustrated in Fig. 8B, the outlet portion 64 is provided with an outlet port 63F of the motor water jacket 63. The outlet port 63F is formed on a left surface of the outlet portion 64 and opens to the left. The outlet port 63F communicates with inside of the outlet chamber 63E. The cooling water flowed in the flow paths 63B, 63C, and 63D passes through the outlet chamber 63E and flows out of the motor water jacket 63 from the outlet port 63F.

The connecting passage 65 is a passage that connects the outlet port 63F of the motor water jacket 63 to the inlet port 67A of the inverter water jacket 67. As illustrated in Fig. 8B, the connecting passage 65 is configured of, for example, a hose 65A and a joint 65B. Since the inverter 35 is disposed above the motor 3, the outlet port 63F of the motor water jacket 63 is disposed at the upper part of the motor 3, and the inlet port 67A of the inverter water jacket 67 is disposed at a lower part of the inverter 35, the outlet port 63F of the motor water jacket 63 is very close to the inlet port 67A of the inverter water jacket 67. Therefore, a length of the connecting passage 65 connecting between the outlet port 63F and the inlet port 67A is extremely short. The cooling water flowed out from the outlet port 63F of the motor water jacket 63 flows in the connecting passage 65 and into the inlet port 67A of the inverter water jacket 67.

As illustrated in Fig. 9A, the inverter water jacket 67 is provided in the lower part of the inverter 35. Specifically, a lower protrusion portion 68 that protrudes downward from a lower surface of the inverter case 37 is formed at a rear part of the inverter case 37. The inverter water jacket 67 includes a flow path 67B provided in the lower protrusion portion 68. The flow path 67B is a hole through which cooling water can flow. The flow path 67B extends from a left end to a right end of the inverter 35 (lower protrusion portion 68). The cooling water flows in the inverter water jacket 67, that is, in the flow path 67B, thereby cooling the inverter 35.

The inlet port 67A of the inverter water jacket 67 is provided in a lower part of the left end of the lower protrusion portion 68. The inlet port 67A opens downward. The inlet port 67A is connected to the connecting passage 65 and communicates with the flow path 67B. The cooling water flows from inside of the connecting passage 65, passes the inlet port 67A, and flows into the flow path 67B.

As illustrated in Fig. 9B, an outlet port 67C of the inverter water jacket 67 is provided at a lower part of the right end of the lower protrusion portion 68. The outlet port 67C opens downward. The outlet port 67C communicates with inside of the flow path 67B via a water temperature control passage 69 described below. The cooling water flowed in the flow path 67B passes through the water temperature control passage 69 and flows out of the inverter water jacket 67 from the outlet port 67C.

The water temperature control passage 69 is provided in a rear right part of the inverter 35. The water temperature control passage 69 is disposed between the flow path 67B of the inverter water jacket 67 and the outlet port 67C of the inverter water jacket 67. The water temperature control passage 69 is configured of, for example, holes formed in a rear right part of the inverter case 37 and in an upper protrusion portion 70 protruding upward from a rear right part of an upper surface of the inverter case 37. One end of the water temperature control passage 69 communicates with the flow path 67B, and the other end of the water temperature control passage 69 communicates with the outlet port 67C. The cooling water flowed in the flow path 67B passes through the water temperature control passage 69 and reaches the outlet port 67C.

The cooling water temperature control valve 71 is provided in midway of the water temperature control passage 69. The cooling water temperature control valve 71 is a valve that changes the amount of cooling water flowing out of the inverter water jacket 67 according to the temperature of cooling water flowed in the inverter water jacket 67. Specifically, the cooling water temperature control valve 71 detects the temperature of the cooling water flowing in the water temperature control passage 69, and changes a valve opening degree based on the detected temperature, thereby changing the amount of the cooling water flowing out of the outlet port 67C of the inverter water jacket 67. The cooling water temperature control valve 71 may be, for example, a thermostat. The cooling water temperature control valve 71 will be described in detail below.

The discharge passage 73 is a passage in which the cooling water flowed out of the outlet port 67C of the inverter water jacket 67 flows toward the drain port 76. As illustrated in Fig. 10, the discharge passage 73 is disposed on the right of the upper part of the marine propulsion device 1, and more specifically, is disposed on the front right of the motor 3. One end of the discharge passage 73 is connected to the outlet port 67C of the inverter water jacket 67. The other end of the discharge passage 73 is connected to a communication hole 74 provided in the drive shaft housing 26. The communication hole 74 is provided on a right wall of the drive shaft housing 26 and communicates with inside of a rear part of the drive shaft housing 26. The discharge passage 73 is configured of, for example, a drain tube 73A, a joint 73B that connects one end of the drain tube 73A to the outlet port 67C of the inverter water jacket 67, and a joint 73C that connects the other end of the drain tube 73A to the communication hole 74 of the drive shaft housing 26. The discharge passage 73 passes a position outside the motor 3 and away from the motor 3. The cooling water flowing out of the outlet port 67C of the inverter water jacket 67 flows in the discharge passage 73, then passes through the communication hole 74, and flows into inside of the rear part of the drive shaft housing 26.

The drain port 76 is provided in a hub of the propeller 20 as illustrated in Fig. 3. In the marine propulsion device 1, a space 75 is provided from inside of the rear part of the drive shaft housing 26 to inside of a rear part of the lower case 27. The cooling water flowed into inside of the rear part of the drive shaft housing 26 from the communication hole 74 flows in the space 75 and is then discharged to outside of the marine propulsion device 1 from the drain port 76.

An operation of the cooling device 51 is as follows. By driving the motor 3, the drive shaft 8 is rotated and the water pump 54 is driven. By driving the water pump 54, water outside the marine propulsion device 1 is taken in from the intake port 52 as cooling water, carried to the water pump 54 via the intake passage 53, and discharged from the discharge port 56A of the water pump 54. The cooling water discharged from the discharge port 56A of the water pump 54 is supplied to the speed reducer cooling chamber 61 and the motor water jacket 63 via the supply passage 59 and the branch passage 60, respectively. The speed reducer 9 is cooled by the cooling water supplied to the speed reducer cooling chamber 61. The cooling water supplied to the motor water jacket 63 flows in the motor water jacket 63, thereby cooling the motor 3. The cooling water flowed in the motor water jacket 63 is supplied to the inverter water jacket 67 via the connecting passage 65. The cooling water supplied to the inverter water jacket 67 flows in the inverter water jacket 67, thereby cooling the inverter 35. The cooling water flowed in the inverter water jacket 67 is carried into the space 75 provided inside of the rear part of the drive shaft housing 26 and inside of the rear part of the lower case 27 via the discharge passage 73, and is then discharged to outside of the marine propulsion device 1 from the drain port 76.

The cooling water flowed in the flow path 67B of the inverter water jacket 67 passes the water temperature control passage 69 and flows out of the outlet port 67C of the inverter water jacket 67 into the discharge passage 73. The cooling water temperature control valve 71 changes the amount of cooling water flowing out from the outlet port 67C of the inverter water jacket 67 to inside of the discharge passage 73 according to the temperature of cooling water flowing in the water temperature control passage 69. Specifically, the cooling water temperature control valve 71 increases the amount of cooling water flowing out from the outlet port 67C of the inverter water jacket 67 as the temperature of cooling water flowing in the water temperature control passage 69 increases.

According to the cooling water temperature control valve 71 that operates as such, it is possible to perform control to adjust the temperature of cooling water generally flowing in the motor water jacket 63 and the inverter water jacket 67 according to a total amount of heat generally generated by the motor 3 and the inverter 35. Specifically, when the amount of heat generally generated by the motor 3 and the inverter 35 increases and the temperature of cooling water generally flowing in the motor water jacket 63 and the inverter water jacket 67 rises, the temperature of the cooling water can be lowered.

Here, how it is possible to perform control to adjust the temperature of cooling water generally flowing in the motor water jacket 63 and the inverter water jacket 67 according to the total amount of heat generally generated by the motor 3 and the inverter 35 by changing the amount of cooling water flowing out of the outlet port 67C of the inverter water jacket 67 into the discharge passage 73 according to the temperature of cooling water flowing in the water temperature control passage 69.

Generally, cooling water flowing in the water temperature control passage 69 is cooling water after flowing in the motor water jacket 63 and the flow path 67B of the inverter water jacket 67. Therefore, cooling water flowing in the water temperature control passage 69 is heated by heat generally generated by the motor 3 and the inverter 35, and the temperature of cooling water rises. Therefore, the temperature of cooling water flowing in the water temperature control passage 69 can be considered to generally represent the total amount of heat generated by the motor 3 and the inverter 35.

By changing the amount of cooling water flowing out of the outlet port 67C of the inverter water jacket 67 into the discharge passage 73, the amount of cooling water generally flowing in each of the motor water jacket 63 and the inverter water jacket 67 can be changed. By changing the amount of cooling water flowing in each of the motor water jacket 63 and the inverter water jacket 67, the temperature of cooling water flowing in the motor water jacket 63 and the inverter water jacket 67 can be changed. Specifically, by increasing the amount of cooling water flowing in each of the motor water jacket 63 and the inverter water jacket 67, the temperature of cooling water flowing in each of the motor water jacket 63 and the inverter water jacket 67 can be lowered.

Therefore, by changing the amount of cooling water flowing out of the outlet port 67C of the inverter water jacket 67 into the discharge passage 73 according to the temperature of cooling water flowing in the water temperature control passage 69, it is possible to perform control to adjust the temperature of cooling water generally flowing in the motor water jacket 63 and the inverter water jacket 67 according to the total amount of heat generally generated by the motor 3 and the inverter 35.

As described above, in the marine propulsion device 1 according to the example of the present invention, the motor 3 is disposed so that the extension direction of the output shaft 4 is the front-rear direction. Therefore, according to the marine propulsion device 1 of the example, the position of the uppermost end of the flow path configuring the motor water jacket 63 can be lowered compared to when the motor 3 is disposed vertically so that the extension direction of the output shaft 4 is the vertical direction of the marine propulsion device 1. Therefore, a difference in height between the position of the discharge port 56A of the water pump 54 and the position of the uppermost end of the flow path configuring the motor water jacket 63 can be reduced, thereby reducing a required head of the water pump 54 to be used in the marine propulsion device 1. Since it is easier to miniaturize a pump having a low head compared to miniaturizing a pump having a high head, by lowering the required head of the water pump to be used in the marine propulsion device 1, the water pump 54 to be used in the marine propulsion device 1 can be miniaturized.

In the marine propulsion device 1 of the example, the speed reducer 9 is disposed in front of the motor 3, the rotation transmission mechanism 14 is disposed below the speed reducer 9, the drive shaft 8 extends in the vertical direction between the speed reducer 9 and the rotation transmission mechanism 14, the impeller 55 of the water pump 54 is attached to the drive shaft 8, and the inlet port 63A of the motor water jacket 63 is disposed at the lower part of the front part of the motor 3. In such configuration, since the speed reducer 9 is disposed in front of the motor 3, the rotation transmission mechanism 14 is disposed below the speed reducer 9, and the drive shaft 8 extends in the vertical direction between the speed reducer 9 and the rotation transmission mechanism 14, the drive shaft 8 is positioned on the lower front of the motor 3. Since the water pump 54 is provided in the drive shaft 8 by attaching the impeller 55 to the drive shaft 8, the water pump 54 is positioned on the lower front of the motor 3. Therefore, the lower part of the front part of the motor 3 is closer to the water pump 54 than any other portions of the motor 3. Therefore, by disposing the inlet port 63A of the motor water jacket 63 at the lower part of the front part of the motor 3, the inlet port 63A of the motor water jacket 63 can be brought closer to the water pump 54. Accordingly, the supply passage 59 that connects the discharge port 56A of the water pump 54 to the inlet port 63A of the motor water jacket 63 can be shortened. By shortening the supply passage 59, pressure loss caused by the cooling water flowing in the supply passage 59 can be reduced.

In the marine propulsion device 1 of the example, the cooling device 51 includes the speed reducer cooling chamber 61 and the branch passage 60, and the speed reducer 9 can be cooled by supplying cooling water to the speed reducer cooling chamber 61 via the branch passage 60. Therefore, performance or durability of the speed reducer 9 can be improved.

The marine propulsion device 1 of the example includes the drive shaft housing 26 that covers the upper part of the drive shaft 8, the motor 3 is mounted on the drive shaft housing 26, and the water pump 54, the speed reducer cooling chamber 61, the supply passage 59, and the branch passage 60 are provided in the drive shaft housing 26. In such configuration, the water pump 54, the speed reducer cooling chamber 61, the supply passage 59, the branch passage 60, and the motor 3 are all disposed in or around the drive shaft housing 26. Therefore, the water pump 54, the speed reducer cooling chamber 61, and the motor 3 can be brought closer to each other, and each of the supply passage 59 and the branch passage 60 can be shortened. Therefore, pressure loss caused by the cooling water flowing in the supply passage 59 or the branch passage 60 can be reduced, and the cooling water can be smoothly supplied to the speed reducer cooling chamber 61 and the motor water jacket 63.

In the marine propulsion device 1 of the example, the cooling device 51 includes the inverter water jacket 67 and the connecting passage 65 that connects the outlet port 63F of the motor water jacket 63 to the inlet port 67A of the inverter water jacket 67, and the inverter 35 can be cooled by supplying cooling water to the inverter water jacket 67 via the connecting passage 65. Therefore, performance or durability of the inverter 35 can be improved.

In the marine propulsion device 1 of the example, the inverter 35 is mounted on the motor 3. Therefore, the inverter 35 and the motor 3 are close to each other. Therefore, the connecting passage 65 that connects the outlet port 63F of the motor water jacket 63 to the inlet port 67A of the inverter water jacket 67 can be shortened, and pressure loss caused by the cooling water flowing in the connecting passage 65 can be reduced.

In the marine propulsion device 1 of the example, the inverter 35 is disposed above the motor 3, the outlet port 63F of the motor water jacket 63 is disposed at the upper part of the motor 3, and the inlet port 67A of the inverter water jacket 67 is disposed at the lower part of the inverter 35. By such configuration, the outlet port 63F of the motor water jacket 63 can be brought closer to the inlet port 67A of the inverter water jacket 67, and the connecting passage 65 that connects the outlet port 63F of the motor water jacket 63 to the inlet port 67A of the inverter water jacket 67 can be shortened. Accordingly, it is possible to reduce pressure loss caused by the cooling water flowing in the connecting passage 65.

In the marine propulsion device 1 of the example, the inverter 35 is disposed above the motor 3, and the inverter water jacket 67 is disposed in the lower part of the inverter 35. By such configuration, the motor water jacket 63 can be brought closer to the inverter water jacket 67, thereby shortening the connecting passage 65.

In the marine propulsion device 1 of the example, the outlet port 67C of the inverter water jacket 67 is disposed at the lower part of the inverter 35. Accordingly, it is possible to shorten the discharge passage 73 that carries the cooling water flowing out of the outlet port 67C of the inverter water jacket 67 to the drain port 76 disposed in the lower part of the marine propulsion device 1. The discharge passage 73 can be prevented from protruding outward in the left-right direction of the marine propulsion device 1.

In the cooling device 51 of the marine propulsion device 1 of the example, the discharge passage 73 passes a position outside the motor 3 and away from the motor 3. By such configuration, when high-temperature cooling water flows in the discharge passage 73, heat of the cooling water is less likely to be transmitted to the motor 3. Accordingly, it is possible to prevent rise in temperature of the motor 3.

In the marine propulsion device 1 of the example, the cooling device 51 includes the cooling water temperature control valve 71 that changes the amount of cooling water flowing out of the inverter water jacket 67 according to the temperature of cooling water flowed in the inverter water jacket 67. Accordingly, the temperature of cooling water generally flowing in the motor water jacket 63 and the inverter water jacket 67 can be controlled using a single valve according to the total amount of heat generally generated by the motor 3 and the inverter 35, thereby simplifying a configuration for performing such cooling water temperature control.

According to the present invention, the pump in the cooling device can be made smaller.

Although the marine propulsion device 1 in the above-described example is an outboard motor, the present invention can also be applied to other types of marine propulsion devices such as inboard/outboard motors.

The present invention can be modified as appropriate without departing from the spirit or the concept of the invention as can be read from the claims and the entire specification, and marine propulsion devices incorporating such modifications are also included in the technical concept of the present invention.

## Claims

1. A marine propulsion device (1) comprising:
a motor (3) including an output shaft (4);
a drive shaft (8) extending in a vertical direction of the marine propulsion device;
a first transmission mechanism (9) configured to transmit a rotation of the output shaft of the motor to the drive shaft,
a propeller shaft (13);
a second transmission mechanism (14) configured to transmit a rotation of the drive shaft to the propeller shaft;
a propeller (20); and
a cooling device (51), wherein
the motor is disposed so that an extension direction of the output shaft is a direction perpendicular to the vertical direction,
the first transmission mechanism is disposed in front of the motor,
the second transmission mechanism is disposed below the first transmission mechanism,
the drive shaft extends between the first transmission mechanism and the second transmission mechanism,
the propeller shaft extends rearward from the second transmission mechanism,
the propeller is provided in a rear part of the propeller shaft, and
the cooling device includes
an intake port (52) configured to take water outside the marine propulsion device into the marine propulsion device,
a motor water jacket (63) provided in the motor and configured to cool the motor,
a water pump (54) disposed below the motor and configured to send water taken into the marine propulsion device from the intake port to the motor water jacket as cooling water, and
a first cooling water passage (59) connecting a discharge port (56A) of the water pump to an inlet port (63F) of the motor water jacket.

2. The marine propulsion device according to claim 1, wherein
an impeller (55) of the water pump is attached to the drive shaft, and
the inlet port of the motor water jacket is disposed at a lower part of a front part of the motor.

3. The marine propulsion device according to claim 1, further comprising:
a transmission mechanism housing (25) covering the first transmission mechanism; and
a drive shaft housing (26) disposed below the transmission mechanism housing and covering an upper part of the drive shaft, wherein
the motor is mounted on the drive shaft housing,
the cooling device includes
a transmission mechanism cooling portion (61) configured to cool the first transmission mechanism using cooling water, and
a second cooling water passage (60) branched from the first cooling water passage and connecting the first cooling water passage to the transmission mechanism cooling portion, and
the water pump, the transmission mechanism cooling portion, the first cooling water passage, and the second cooling water passage are provided in the drive shaft housing.

4. The marine propulsion device according to claim 1, further comprising:
an inverter (35) configured to control driving of the motor, wherein
the inverter is mounted on the motor, and
the cooling device includes
an inverter water jacket (67) provided in the inverter and configured to cool the inverter, and
a third cooling water passage (65) connecting an outlet port (63F) of the motor water jacket to an inlet port (67A) of the inverter water jacket.

5. The marine propulsion device according to claim 4, wherein
the inverter is disposed above the motor,
the outlet port of the motor water jacket is disposed at an upper part of the motor, and
the inlet port of the inverter water jacket is disposed at a lower part of the inverter.

6. The marine propulsion device according to claim 5, wherein the inverter water jacket is disposed at the lower part of the inverter.

7. The marine propulsion device according to claim 4, wherein an outlet port of the inverter water jacket is disposed at a lower part of the inverter.

8. The marine propulsion device according to claim 4, wherein
the cooling device includes
a drain port (76) configured to discharge cooling water from inside of the marine propulsion device to outside of the marine propulsion device, and
a fourth cooling water passage (73) connected to an outlet port (67C) of the inverter water jacket and configured to flow cooling water flowing out of the outlet port of the inverter water jacket toward the drain port, and
the fourth cooling water passage passes a position outside the motor and away from the motor.

9. The marine propulsion device according to claim 4, wherein the cooling device includes a valve (71) configured to change an amount of cooling water flowing out of the inverter water jacket according to a temperature of cooling water flowed in the inverter water jacket.

10. The marine propulsion device according to claim 1, wherein the extension direction of the output shaft of the motor is a front-rear direction of the marine propulsion device.
